# EUROPÄISCHE PATENTANMELDUNG

(11) **EP 3 643 886 A2**
(43) Veröffentlichungstag der Anmeldung: **29.04.2020**
(21) Anmeldenummer: 19204410.5
(22) Anmeldetag: 21.10.2019
(51) Int. Cl.: F01D 15/02

(54) **VORRICHTUNG UND VERFAHREN ZUM ANTREIBEN EINES FAHRZEUGS, FLUGZEUGS, SCHIFFS ODER DERGLEICHEN**

(30) Priorität: 24.10.2018 DE 102018126496
(71) Anmelder: HK Innovation UG, 78166 Donaueschingen (DE)
(72) Erfinder: Hablitzel, Klaus, 78166 Donaueschingen (DE)
(74) Vertreter: Westphal, Mussgnug & Partner Patentanwälte mbB

(57) **Zusammenfassung**

Die vorliegende Erfindung betrifft eine Vorrichtung zum Antreiben eines Fahrzeugs (12) umfassend einen Elektrolyseur (14) zum Zerlegen von Wasser in Wasserstoff und Sauerstoff unter Verwendung von elektrischer Energie. Der vom Elektrolyseur bereitgestellte Wasserstoff und Sauerstoff wird über entsprechende Leitungen in eine oder mehrere Brennkammern (28) geleitet, wo ein Wasserstoff-Sauerstoff-Gemisch gezündet und Wasserdampf erzeugt werden kann. Mittels dieses Wasserdampfes wird eine Antriebsturbine (36) mit Antriebswelle (39) angetrieben. Die mechanische Leistung wird über eine Abtriebseinheit (68) zum Antreiben des,Fahrzeugs (12) verwendet. Zusätzlich kann eine Batterie (20) vorgesehen sein, die wahlweise über Solarzellen (22) und/ oder einen Generator (21) gespeist wird. Der Generator (21) kann dabei über ein Verteilergetriebe (64) mit der Antriebswelle (39) verbunden sein und so überschüssige mechanische Leistung in elektrische Energie wandeln.Durch diese Antriebseinheit kann der CO₂-Ausstoß des Fahrzeugs erheblich reduziert werden.

## Beschreibung

Die vorliegende Erfindung betrifft eine Vorrichtung und ein Verfahren zum Antreiben eines Fahrzeugs, Flugzeugs, Schiffs oder dergleichen. Weiterhin betrifft die Erfindung ein Fahrzeug, Flugzeug, Schiff oder dergleichen, welches eine derartige Vorrichtung aufweist und/oder mit einem solchen Verfahren antreibbar ist.

Im Zuge der Bestrebungen, den CO₂-Ausstoß zu verringern, rückt der Antrieb von Fahrzeugen, Zügen, Flugzeugen und Schiffen zunehmend in den Fokus. Die Elektrifizierung der Antriebe wird dabei als einer der erfolgversprechenden Ansatzpunkte angesehen, den CO₂-Ausstoß zu verringern. Ein nach wie vor nicht zufriedenstellend gelöstes Problem bei elektrifizierten Antrieben ist die geringe Speicherkapazität der Akkumulatoren, welche die für den Antrieb genötigte elektrische Energie speichern. Entsprechend gering ist die Reichweite von Fahrzeugen, welche einen elektrifizierten Antrieb aufweisen. Hinzu kommt, dass zum Prioritätszeitpunkt der vorliegenden Anmeldung keine flächendeckende Infrastruktur zum Aufladen der Akkumulatoren vorhanden ist, so dass insbesondere außerhalb von Ballungsgebieten ein rein elektrisches Fahren nur sehr bedingt möglich ist.

Um diesem Problem zu begegnen, sind Hybrid-Fahrzeuge entwickelt worden, welche neben dem Elektromotor noch weitere Antriebsquellen aufweisen. Als Antriebsquellen können konventionelle Verbrennungsmotoren, die mit fossilen Brennstoffen betrieben werden, oder Verbrennungsmotoren, die mit Wasserstoff betrieben werden, verwendet werden. Bei der Verwendung von fossilen Brennstoffen wird jedoch das eingangs genannte Ziel, den CO₂-Ausstoß zu reduzieren, nur bedingt erreicht. Bei der Verwendung von Wasserstoff tritt ebenfalls das oben genannte Problem in der nicht flächendeckend verfügbaren Infrastruktur zutage.

Dieses Problem tritt auch bei Brennstoffzellen auf, bei denen die elektrische Energie aus der Reaktion von Wasserstoff mit Sauerstoff gewonnen wird.

Ein weiteres Problem, welches bei der Verwendung von Wasserstoff als Brennstoff auftritt, ist die hohe Explosionsneigung von Wasserstoff. Um diese zu vermindern, wird der Wasserstoff verflüssigt, wozu sehr tiefe Temperaturen benötigt werden. Entsprechend müssen die Wasserstofftanks wärmeisoliert sein, wodurch diese eine sehr aufwendige Konstruktion erforderlich machen, die einerseits viel Bauraum einnimmt und andererseits das Gewicht nicht unerheblich erhöht. Weiterhin wird die Energiebilanz aufgrund der zur Verflüssigung des Wasserstoffs benötigten Energie verschlechtert.

Beispiele von Fahrzeugantrieben, welche Wasserstoff als Energiequelle verwenden, sind in der US 2007/0068713 A1 und der CN 106 915 235 offenbart.

Aufgabe einer Ausführungsform der vorliegenden Erfindung ist es, eine Vorrichtung zum Antreiben von Fahrzeugen, Flugzeugen, Schiffen oder dergleichen anzugeben, mit welcher es mit einfachen und kostengünstigen Mitteln möglich ist, den CO₂-Ausstoß zu verringern und eine große Reichweite zu ermöglichen. Des Weiteren liegt einer Ausgestaltung der vorliegenden Erfindung die Aufgabe zugrunde, ein Verfahren zu schaffen, welches mit dieser Vorrichtung durchführbar ist. Darüber hinaus liegt einer Ausführung der vorliegenden Erfindung die Aufgabe zugrunde, ein Fahrzeug, ein Flugzeug, ein Schiff oder dergleichen zu schaffen, welches mit einer derartigen Vorrichtung ausgestattet ist und/oder welches mit einem solchen Verfahren betreibbar ist.

Diese Aufgabe wird mit den in den Ansprüchen 1, 12 und 15 angegebenen Merkmalen gelöst. Vorteilhafte Ausführungsformen sind Gegenstand der Unteransprüche.

Eine Ausführungsform der Erfindung betrifft eine Vorrichtung zum Antreiben eines Fahrzeugs, Flugzeugs, Schiffs oder dergleichen, umfassend
- einen Elektrolyseur zum Zerlegen von Wasser in Wasserstoff und Sauerstoff unter Verwendung von elektrischer Energie,
- eine Wasserstoffleitung, durch welche Wasserstoff vom Elektrolyseur zu einer oder mehreren Brennkammern geführt werden kann,
- eine Sauerstoffleitung, durch welche Sauerstoff vom Elektrolyseur zur Brennkammer geführt werden kann, wobei
- in der Brennkammer ein Wasserstoff-Sauerstoff-Gemisch gezündet und Wasserdampf erzeugt werden kann,
- eine mit der Brennkammer zusammenwirkende Antriebsturbine mit einer Antriebswelle, welche mit dem Wasserdampf in Drehung versetzbar ist, und
- eine Abtriebseinheit zum Antreiben des, Fahrzeugs, Flugzeugs, Schiffs oder dergleichen, wobei die Abtriebseinheit mit der Antriebswelle antreibbar ist.

Unter einer Abtriebseinheit soll im Rahmen der nachfolgenden Beschreibung beispielsweise das angetriebene Rad eines Fahrzeugs oder einer Lokomotive, oder der angetriebene Propeller oder die angetriebene Turbine eines Flugzeugs oder eines Schiffes verstanden werden.

Vorschlagsgemäß wird Wasser in seine Bestandteile Wasserstoff und Sauerstoff im Elektrolyseur zerlegt, wozu elektrische Energie benötigt wird. Anschließend werden der Wasserstoff durch die Wasserstoffleitung und der Sauerstoff durch die Sauerstoffleitung in die Brennkammer geführt. Dort wird ein zündbares Wasserstoff-Sauerstoff-Gemisch erzeugt, welches sich je nach Mischverhältnis und Temperatur in der Brennkammer selbst entzünden kann. Aufgrund der dann stattfindenden Reaktion, die auch als Knallgas-Reaktion bezeichnet und bei welcher Wasserdampf erzeugt wird, entsteht eine Druckwelle, welche zum Antreiben der Antriebswelle der Antriebsturbine verwendet wird. Die Antriebswelle wiederum treibt die Abtriebseinheit an.

Ein wesentlicher Vorteil der vorliegenden Vorrichtung ist, dass der Wasserstoff unmittelbar nachdem er im Elektrolyseur erzeugt worden ist, wieder in Wasserdampf umgewandelt wird, so dass der Wasserstoff nicht aufwendig gelagert werden muss, wie es beispielsweise bei den oben beschriebenen Verbrennungsmotoren oder bei der Brennstoffzelle notwendig ist. Auf eine Wasserstoff-Infrastruktur kann verzichtet werden, da nicht der Wasserstoff selbst, sondern nur das Wasser vorgehalten werden muss. Im Gegensatz zu Wasserstoff ist Wasser nahezu unbegrenzt verfügbar und lässt sich auf sehr einfache Weise lagern und ist nicht explosiv. Ein energieaufwendiges Verflüssigen des Wasserstoffs entfällt.

Nach Maßgabe einer weiteren Ausführungsform weist die Vorrichtung einen Speicher für elektrische Energie auf. Der Speicher für elektrische Energie kann beispielsweise als Akkumulator ausgeführt werden. Der Akkumulator stellt die für die Elektrolyse notwendige elektrische Energie zur Verfügung, wodurch die Elektrolyse kontinuierlich durchgeführt werden kann. Folglich können der für den Antrieb der Abtriebseinheit benötigte Wasserstoff und Sauerstoff in der ausreichenden Menge bereitgestellt werden.

In einer weitergebildeten Ausführungsform kann die Vorrichtung eine Anzahl von Solarzellen und/oder eine Anzahl von Generatoren zum Bereitstellen von elektrischer Energie aufweisen. Mit Solarzellen kann die im Sonnenlicht enthaltene Strahlungsenergie in elektrische Energie umgewandelt werden. Die Oberfläche des Fahrzeugs kann mit Solarzellen versehen werden, wobei mittlerweile auch Lösungen bekannt sind, bei denen die Solarzellen an die Form beispielsweise eines Fahrzeugs angepasst und in die Lackierung des Fahrzeugs integriert werden können. Die von den Solarzellen bereitgestellte elektrische Energie kann entweder direkt weiter Elektrolyse verwendet werden oder dem Akkumulator zugeführt werden. Im Falle eines Generators kann dieser kontinuierlich unter Verwendung von erneuerbaren Energien betrieben werden, auch 24 Stunden am Tag. Insofern kann der Akkumulator ständig aufgeladen werden, auch wenn gerade keine elektrische Energie benötigt wird. Je nach Art sind erneuerbare Energien zeitlich unbegrenzt vorhanden, so dass der Akkumulator bei Bedarf aufgeladen werden kann.

In beiden Fällen besteht die Möglichkeit, auch im Betrieb der Vorrichtung elektrische Energie bereitzustellen, wodurch die Reichweite des mit der vorschlagsgemäßen Vorrichtung angetriebenen Fahrzeugs, Flugzeugs oder Schiffs vergrößert wird.

Bei einer weitergebildeten Ausführungsform kann die Vorrichtung einen Generator zum Bereitstellen von elektrischer Energie und ein Verteilergetriebe aufweisen, wobei das Verteilergetriebe mit der Antriebswelle, dem Generator und der Abtriebseinheit verbunden ist und das von der Antriebswelle bereitgestellte Drehmoment wahlweise an den Generator und/oder die Abtriebseinheit verteilt. Insbesondere für den Fall, dass die vorschlagsgemäße Vorrichtung zum Antreiben eines Fahrzeugs verwendet wird, tritt folgende Situation auf: Insbesondere im Stadtverkehr muss das Fahrzeug häufig beschleunigt und abgebremst werden, wobei beispielsweise bei roten Ampeln das Fahrzeug vollständig zum Stillstand kommt. Da aber die Antriebsturbine einen relativ eng begrenzten optimalen Betriebsbereich hat, in welchem sie ökonomisch sinnvoll betrieben werden kann, ist man bestrebt, ein häufiges Beschleunigen und Verzögern der Antriebsturbine zu vermeiden. Da aber im Stadtverkehr das Drehmoment, welches die Antriebsturbine im optimalen Betriebsbereich an die Antriebswelle abgibt, nicht immer benötigt wird, kann dieses Drehmoment über das Verteilergetriebe zum Generator geleitet werden, der wiederum das Drehmoment in elektrische Energie umwandelt. Mit dieser elektrischen Energie kann der Akkumulator gespeist werden. Alternativ kann die vom Generator bereitgestellte elektrische Energie zum Elektrolyseur geleitet und dort zur Elektrolyse verwendet werden. Somit geht das nicht benötigte Drehmoment nicht ungenutzt verloren. Da die Antriebsturbine weitgehend im optimalen Betriebsbereich betrieben werden kann, kann der Wirkungsgrad der Vorrichtung hochgehalten werden.

Bei einer weiteren Ausführungsform kann die Vorrichtung einen Wassertank aufweisen, in welchem Wasser gespeichert wird, wobei der Wasserdampf durch eine Wasserdampfleitung von der Antriebsturbine in den Wassertank und das Wasser durch eine Wasserleitung zum Elektrolyseur geleitet werden kann. Aufgrund der Tatsache, dass der Wasserdampf wieder zurück in den Wassertank geleitet werden kann, wird das Wasser im Kreislauf geführt, so dass im Betrieb der Vorrichtung kein oder nur sehr wenig Wasser verloren geht. Die aufzufüllende Menge des Wassers hält sich daher in engen Grenzen, wodurch der Betrieb der Vorrichtung unkompliziert ist.

Eine weitergebildete Ausführungsform zeichnet sich dadurch aus, dass die Vorrichtung eine in der Wasserdampfleitung angeordnete Wasserdampfturbine mit einer Ausgangswelle, welche mit dem Wasserdampf in Drehung versetzbar ist, und einen in der Wasserstoffleitung angeordneten Wasserstoffverdichter und/oder einen in der Sauerstoffleitung angeordneten Sauerstoffverdichter umfasst, wobei der Wasserstoffverdichter und/oder der Sauerstoffverdichter mittels der Ausgangswelle antreibbar sind. In dieser Ausführungsform können die Menge des Sauerstoffs und die Menge des Wasserstoffs, welche der Brennkammer zugeführt werden, erhöht werden. Die an die Antriebswelle abgegebene Leistung der Antriebsturbine wird hierdurch erhöht. Dabei wird die im Wasserdampf enthaltene Energie, welche im Wasserdampf nach Durchströmen der Antriebsturbine noch enthalten ist, ähnlich wie bei einem Abgas-Turbolader zum Verdichten des Wasserstoffs und des Sauerstoffs verwendet.

Nach Maßgabe einer weiteren Ausführungsform umfasst die Vorrichtung einen mit der Wasserstoffleitung verbindbaren Wasserstofftank und/oder einen mit der Sauerstoffleitung verbindbaren Sauerstofftank. Die Verbindung des Wasserstofftanks und des Sauerstofftanks mit der Wasserstoffleitung bzw. der Sauerstoffleitung kann mittels geeigneter Ventile hergestellt werden. Eine derartige Ausführungsform bietet sich insbesondere bei Schiffen an, bei denen genügend Platz für den Sauerstofftank und den Wasserstofftank zur Verfügung steht. Hierdurch wird sichergestellt, dass selbst dann, wenn die Elektrolyse nicht genügend Wasserstoff und Sauerstoff zur Verfügung stellen kann oder der Elektrolyseur ausfällt, die Vorrichtung betrieben werden kann.

Eine weitere Ausführungsform zeichnet sich dadurch aus, dass die Vorrichtung eine in oder an der Brennkammer angeordnete Zündkerze zum Zünden des Wasserstoff-Sauerstoff-Gemischs in der Brennkammer aufweist. Die Mengenverhältnisse des Wasserstoff- Sauerstoff-Gemischs können so gewählt werden, dass sich das Wasserstoff-Sauerstoff-Gemisch selbst entzündet. Allerdings ist es insbesondere beim Start der Vorrichtung vorteilhaft, wenn das Wasserstoff-Sauerstoff-Gemisch fremdgezündet werden kann. Zudem können mittels der Zündkerze auch Wasserstoff-Sauerstoff-Gemische mit Mengenverhältnissen gezündet werden, die nicht selbst zünden. Hiermit lässt sich das von der Antriebsturbine an die Antriebswelle abgegebene Drehmoment in weiten Bereichen verändern.

Nach Maßgabe einer weiteren Ausführungsform weist die Vorrichtung einen Temperatursensor zum Bestimmen der Temperatur in der Brennkammer auf. Bei der Reaktion von Sauerstoff und Wasserstoff können sehr hohe Temperaturen auftreten, die zu Beschädigungen des Materials der Brennkammer führen können. Mithilfe des Temperatursensors kann erkannt werden, wenn sich die Temperatur in der Brennkammer einem kritischen Wert nähert. In diesem Fall können entsprechende Gegenmaßnahmen ergriffen werden, um ein Überschreiten des kritischen Werts zu verhindern. Eine Schädigung des Materials der Brennkammer infolge von zu hohen Temperaturen kann hierdurch vermieden werden.

Eine weitere Ausführungsform weist die Vorrichtung eine Wasserzuführeinheit zum Zuführen von Wasser in die Brennkammer auf. Wie erwähnt, kann das Material der Brennkammer infolge einer zu hohen Temperaturbelastung geschädigt werden. Die Temperatur innerhalb der Brennkammer kann durch die Zufuhr von Wasser verringert werden, wodurch eine Schädigung des Materials der Brennkammer auf einfache Weise vermieden werden kann.

Bei einer weiteren Ausführungsform kann die Vorrichtung ein Umwandlungselement zum Umwandeln von Wärme in elektrische Energie umfassen. Ein derartiges Umwandlungselement kann beispielsweise in Form eines thermoelektrischen Elements ausgeführt werden. Die im Betrieb der Vorrichtung entstehende Wärme, die sonst nicht weiter verwendet werden kann, kann in dieser Ausführungsform in elektrische Energie umgewandelt und beispielsweise dem Speicher für elektrische Energie oder dem Elektrolyseur zugeführt werden. Folglich geht diese Wärme nicht ungenutzt verloren. Außerdem wird der Wasserdampf kondensiert und kann als Wasser zum Wassertank zurückgeleitet werden.

Eine Ausgestaltung der Erfindung betrifft ein Verfahren zum Antreiben eines Fahrzeugs, Flugzeugs, Schiffs oder dergleichen mit einer Vorrichtung nach einem der vorherigen Ausführungsformen, umfassend folgende Schritte:
- Zuführen von Wasser und elektrischer Energie zum Elektrolyseur,
- Zerlegen des Wassers in Wasserstoff und Sauerstoff mittels des Elektrolyseurs,
- Zuführen des Wasserstoffs durch die Wasserstoffleitung und des Sauerstoffs über die Sauerstoffleitung in die Brennkammer derart, dass in der Brennkammer ein zündbares Wasserstoff-Sauerstoff-Gemisch bereitgestellt wird,
- Zünden des Wasserstoff-Sauerstoff-Gemischs in der Brennkammer und Erzeugen von Wasserdampf,
- Leiten des Wasserdampfs auf eine Antriebsturbine, die eine Antriebswelle umfasst, welche mit dem Wasserdampf in Drehung versetzt wird, und
- Antreiben des Fahrzeugs, Flugzeugs, Schiffs oder dergleichen mittels einer Abtriebseinheit, die von der sich drehenden Antriebswelle angetrieben wird.

Die technischen Effekte und Vorteile, die sich mit dem vorschlagsgemäßen Verfahren erreichen lassen, entsprechen denjenigen, die für die vorliegende Vorrichtung erörtert worden sind. Zusammenfassend sei darauf hingewiesen, dass ein Fahrzeug, ein Flugzeug, ein Schiff oder dergleichen mit einem reduzierten CO₂-Ausstoß und mit einer großen Reichweite angetrieben werden kann. Da der Wasserstoff kurz nach seiner Bereitstellung wieder mit Sauerstoff zu Wasserdampf reagiert, ist es nicht notwendig, Wasserstoff zu lagern, weshalb keine aufwendigen Maßnahmen ergriffen werden müssen, um seiner Explosionsneigung entgegenzuwirken.

Bei einer weiteren Ausgestaltung ist vorgesehen, dass das Verfahren folgende Schritte umfasst:
- Bestimmen der Temperatur in der Brennkammer mittels eines Temperatursensors, und
- für den Fall, dass die Temperatur in der Brennkammer einen bestimmten Wert überschreitet, Zuführen von Wasser aus dem Wassertank in die Brennkammer mittels der Wasserzuführeinheit, um die Temperatur in der Brennkammer zu senken.

Wie erwähnt, kann das Material der Brennkammer infolge einer zu hohen Temperaturbelastung geschädigt werden. Die Temperatur innerhalb der Brennkammer kann durch die Zufuhr von Wasser verringert werden, wodurch eine Schädigung des Materials der Brennkammer auf einfache Weise vermieden werden kann.

Eine fortentwickelte Ausgestaltung des Verfahrens umfasst folgende Schritte:
- Steuern oder Regeln der Drehzahl der Antriebswelle mittels der Menge des in die Brennkammer zugeführten Wasserstoffs und der Menge des in die Brennkammer zugeführten Sauerstoffs und/oder mittels der Wahl der Zündzeitpunkte des Wasserstoff-Sauerstoff-Gemischs in der Brennkammer.

Die Mengen des Wasserstoffs und des Sauerstoffs, welche der Brennkammer zugeführt werden sowie die Mengenverhältnisse können mit einem Dosiersystem gesteuert werden. Mit dieser Ausgestaltung des Verfahrens ist es möglich, die Drehzahl der Antriebswelle in einem weiten Bereich zu steuern, ohne dass hierzu ein Getriebe notwendig ist. Zum einen ist ein Getriebe ein komplexes und schweres Bauteil, welches teuer in der Herstellung ist und selbst zum Gewicht des Fahrzeugs, des Flugzeugs oder des Schiffs beiträgt und daher einen erhöhten Energiebedarf nach sich zieht, was zu einer Reduzierung der Reichweite führt. Zum anderen sind Getriebe relativ störanfällig, so dass diese plötzlich ausfallen können, wodurch das Fahrzeug, das Flugzeug oder das Schiff nicht mehr bestimmungsgemäß betrieben werden kann. Darüber hinaus benötigen Getriebe einen bestimmten Bauraum, der insbesondere in Fahrzeugen und Flugzeugen knapp bemessen ist. All diese Nachteile lassen sich mit dieser Ausgestaltung des Verfahrens beheben.

Eine Ausführung der Erfindung betrifft ein Fahrzeug, Flugzeug, Schiff oder dergleichen, welches eine Vorrichtung nach einem der vorherigen Ausführungen aufweist und/oder mit einem Verfahren nach einem der zuvor diskutierten Ausgestaltungen antreibbar ist. Die technischen Effekte und Vorteile, die sich mit dem vorschlagsgemäßen Fahrzeug, Flugzeug, Schiff oder dergleichen erreichen lassen, entsprechen denjenigen, die für die vorliegende Vorrichtung und das vorliegende Verfahren erörtert worden sind. Zusammenfassend sei darauf hingewiesen, dass ein Fahrzeug, ein Flugzeug, ein Schiff oder dergleichen mit einem reduzierten CO₂-Ausstoß und mit einer großen Reichweite betrieben werden kann. Da der Wasserstoff kurz nach seiner Bereitstellung wieder mit Sauerstoff zu Wasserdampf reagiert, ist es nicht notwendig, Wasserstoff zu lagern, weshalb keine aufwendigen Maßnahmen ergriffen werden müssen, um seiner Explosionsneigung entgegenzuwirken.

Beispielhafte Ausführungsformen der Erfindung werden im Folgenden unter Bezugnahme auf die beigefügten Zeichnungen näher erläutert. Es zeigen
- Figur 1: eine schematische Darstellung einer Ausführungsform der vorschlagsgemäßen Vorrichtung, und
- Figur 2: eine prinzipielle Schnittdarstellung durch eine Brennkammer der vorschlagsgemäßen Vorrichtung.

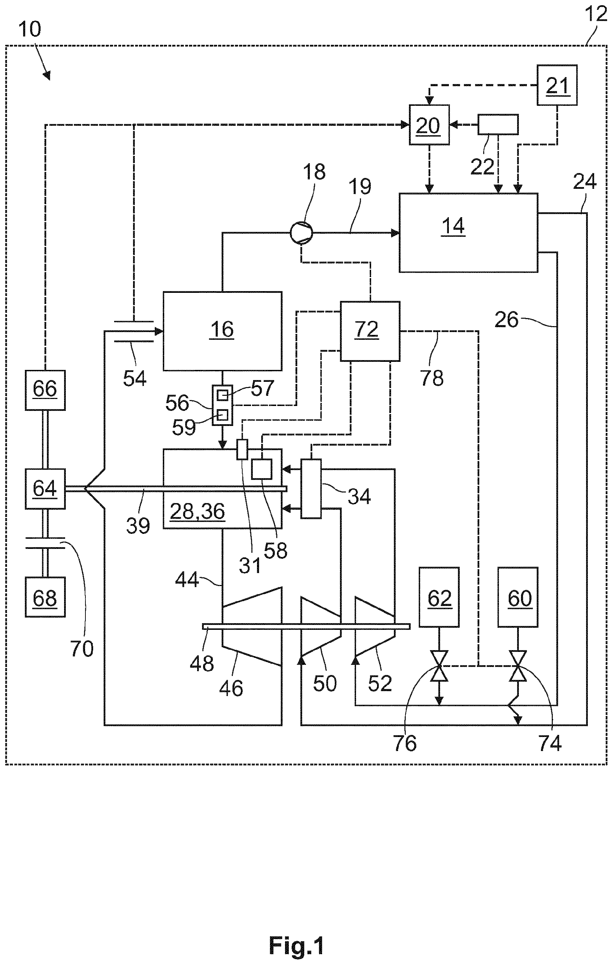

Figur 1 zeigt eine schematische Darstellung eines Ausführungsbeispiels der erfindungsgemäßen Vorrichtung 10, welche zum Antreiben eines Fahrzeugs 10, eines Flugzeugs, eines Schiffs oder dergleichen verwendet werden kann. Die Vorrichtung 10 umfasst einen Elektrolyseur 14, in welchem Wasser in Wasserstoff und Sauerstoff aufgespalten werden kann. Das hierzu benötigte Wasser wird in einem Wassertank 16 vorgehalten und mit einem Fördermittel 18, beispielsweise mit einer Pumpe, durch eine Wasserleitung 19 zum Elektrolyseur 14 geleitet. Die zum Aufspalten des Wassers in Wasserstoff und Sauerstoff benötigte elektrische Energie wird mittels eines Speichers 20, beispielsweise eines Akkumulators, eines Generators 21 und/oder einer Solarzelle 22, dem Elektrolyseur 14 zur Verfügung gestellt. Der Generator und die Solarzelle 22 sind nicht nur mit dem Elektrolyseur 14, sondern auch mit dem Speicher 20 für elektrische Energie verbunden, so dass für den Fall, dass keine elektrische Energie im Elektrolyseur 14 benötigt wird, der Generator 21 und/oder die Solarzelle 22 aber dennoch elektrische Energie bereitstellen können, diese dem Speicher 20 zugeführt und dort gespeichert werden kann. Der Generator 21 kann auf Basis von erneuerbaren Energien kontinuierlich betrieben werden, auch 24 Stunden am Tag. Je nach Ausgestaltung kann der Generator 21 elektrische Energie mit einer Spannung von 12, 24 oder 48 Volt zur Verfügung stellen.

Die Solarzellen können an den Oberflächen des Fahrzeugs 10, des Flugzeugs oder des Schiffs angeordnet und in die Lackierung integriert werden. Der Speicher 20 kann austauschbar ausgestaltet werden, so dass der Speicher 20 für den Fall, dass der Befüllungsgrad ein bestimmtes Maß unterschreitet, gegen einen aufgeladenen Speicher 20 ausgetauscht werden kann. Der Austausch kann an entsprechenden Tauschstationen vorgenommen werden. Schnellwechselsysteme ermöglichen den Tausch innerhalb von kurzer Zeit.

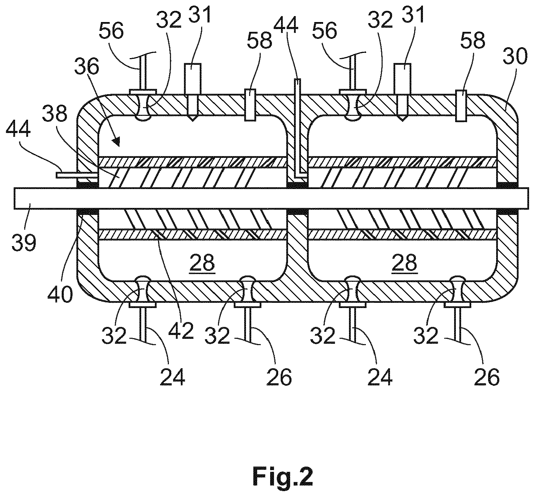

Der Elektrolyseur 14 ist mittels einer Wasserstoffleitung 24 und mittels einer Sauerstoffleitung 26 mit einer Anzahl von Brennkammern 28 verbunden, die von einem Gehäuse 30 gebildet werden. Die Brennkammern 28 sind in Figur 2 im Detail dargestellt, so dass sich die folgende Beschreibung auch auf die Figur 2 bezieht. Der im Elektrolyseur 14 erzeugte Wasserstoff und der im Elektrolyseur 14 erzeugte Sauerstoff können über die Wasserstoffleitung 24 bzw. die Sauerstoffleitung 26 derart in die Brennkammern 28 geleitet werden, dass dort ein zündfähiges Wasserstoff-Sauerstoff-Gemisch entsteht, welches entweder selbst zündet oder mittels einer Zündkerze 31 gezündet werden kann. Um eine gute Durchmischung des Wasserstoffs und des Sauerstoffs in den Brennkammern 28 zu erreichen, werden der Sauerstoff und der Wasserstoff mit entsprechend ausgestalteten Einspritzdüsen 32 in die Brennkammern 28 eingespritzt, die Teil eines Dosiersystems 34 sind, mit dem auch das Verhältnis von Wasserstoff zu Sauerstoff eingestellt werden kann.

Der bei der Zündung des Wasserstoff-Sauerstoff-Gemischs entstehende und unter Druck stehende Wasserdampf wird auf eine Antriebsturbine 36 geleitet, die eine Anzahl von Turbinenschaufeln 38 aufweist, welche mit einer Antriebswelle 39 verbunden sind. Die Antriebswelle 39 ist mit entsprechenden Lagern 40 im Gehäuse 30 der Brennkammern 28 gelagert. Die Brennkammern 28 sind ringförmig um die Antriebsturbine 36 herum angeordnet, wobei der Wasserdampf über eine Anzahl von Kanälen 42 von der Brennkammer 28 auf die Turbinenschaufeln 38 geleitet wird. Die Kanäle 42 sind so dimensioniert und angeordnet, dass die Turbinenschaufeln 38 und folglich die Antriebswelle 39 gleichmäßig belastet werden, wodurch die Lager 40 geschont werden.

Aufgrund der Tatsache, dass im dargestellten Ausführungsbeispiel zwei Brennkammern 28 nebeneinander angeordnet sind, kann das Wasserstoff-Sauerstoff-Gemisch in den jeweiligen Brennkammern 28 zu unterschiedlichen Zeitpunkten gezündet werden, wodurch die Antriebsturbine 36 gleichmäßiger angetrieben werden kann als für den Fall, dass nur eine Brennkammer 28 verwendet wird. Die Anzahl der Brennkammern 28 kann prinzipiell frei gewählt werden, wobei mit ansteigender Anzahl von Brennkammern 28 die Antriebsturbine 36 gleichmäßiger und ruckfrei angetrieben werden kann.

Nachdem der Wasserdampf die Antriebsturbine 36 durchströmt hat, wird dieser durch eine Wasserdampfleitung 44 zurück zum Wassertank 16 geleitet. Wie aus Figur 1 ersichtlich, ist in der Wasserdampfleitung 44 eine Wasserdampfturbine 46 angeordnet, welche die im Wasserdampf enthaltene Energie in eine rotatorische Bewegung einer Ausgangswelle 48 der Wasserdampfturbine 46 umgewandelt. Die Ausgangswelle 48 ist mit einem Wasserstoffverdichter 50 und einem Sauerstoffverdichter 52 verbunden. Der Wasserstoffverdichter 50 ist innerhalb der Wasserstoffleitung 24 und der Sauerstoffverdichter 52 innerhalb der Sauerstoffleitung 26 angeordnet. Hierdurch werden der Wasserstoff und der Sauerstoff vor dem Eintritt in die Brennkammern 28 verdichtet.

Darüber hinaus ist in der Wasserdampfleitung 44 ein Umwandlungselement 54 angeordnet, welches beispielsweise als ein thermoelektrisches Element ausgeführt werden kann. Das thermalelektrische Element wandelt die im Wasserdampf enthaltene thermische Energie in elektrische Energie um und führt diese dem Speicher 20 zu.

Weiterhin umfasst die Vorrichtung 10 eine Wasserzuführeinheit 56, mit welcher Wasser vom Wassertank 16 in die Brennkammern 28 gefördert werden kann. Die Wasserzuführeinheit 56 weist eine Pumpe 57 sowie ein Ventil 59 auf. Wie der Wasserstoff und der Sauerstoff auch kann das Wasser mittels einer entsprechend ausgestalteten Einspritzdüsen 32 in die Brennkammern 28 eingebracht werden.

Weiterhin ist in jeder Brennkammer ein Temperatursensor 58 angeordnet, mit welchem die Temperatur in der Brennkammer bestimmt werden kann.

Darüber hinaus weist die Vorrichtung 10 einen Wasserstofftank 60 und einen Sauerstofftank 62 auf, in welchen Wasserstoff bzw. Sauerstoff gelagert und der Wasserstoffleitung 24 bzw. der Sauerstoffleitung 26 zugeführt werden können.

Die Antriebswelle 39 der Antriebsturbine 36 ist mit einem Verteilergetriebe 64 verbunden, welche das von der Antriebswelle 39 übertragene Drehmoment wahlweise auf einen Generator 66 und/oder eine Abtriebseinheit 68 verteilt. Die Abtriebseinheit 68 ist in diesem Fall das angetriebene Rad des Fahrzeugs 10 oder der angetriebene Propeller eines Flugzeugs oder eines Schiffs. Zwischen dem Verteilergetriebe 64 und der Abtriebseinheit 68 ist eine Kupplung 70 angeordnet, mit welcher die Drehmomentübertragung zur Abtriebseinheit 68 vollständig unterbrochen werden kann, sofern dies notwendig sein sollte. Je nachdem, wie viel Drehmoment an der Abtriebseinheit 68 benötigt wird, kann mittels des Verteilergetriebes die entsprechende Menge an Drehmoment an die Abtriebseinheit 68 geleitet werden. Für den Fall, dass nicht das gesamte Drehmoment an der Abtriebseinheit 68 benötigt wird, kann das nicht benötigte Drehmoment an den Generator 66 geleitet werden, der das Drehmoment in elektrische Energie umwandelt und dem Speicher 20 für elektrische Energie zuführt.

Die gesamte Vorrichtung 10 wird mittels einer Steuereinheit 72 gesteuert, welche die Vorrichtung 10 auf folgende Weise betreiben kann: Aus dem Wassertank 16 wird eine entsprechende Menge von Wasser in den Elektrolyseur 14 gefördert, wo unter Verwendung von elektrischer Energie das Wasser in Wasserstoff und Sauerstoff aufgespaltet wird. Die elektrische Energie wird entweder vom Speicher 20 oder von der Solarzelle 22 bereitgestellt. Anschließend werden der Wasserstoff und der Sauerstoff über die Wasserstoffleitung 24 bzw. die Sauerstoffleitung 26 auf den Wasserstoffverdichter 50 bzw. Sauerstoffverdichter 52 gegeben und dort verdichtet. Danach werden der komprimierte Wasserstoff und der komprimierten Sauerstoff in die jeweiligen Brennkammern 28 eingebracht, wo ein zündbares Wasserstoff-Sauerstoff-Gemisch bereitgestellt wird. Je nachdem, welche Bedingungen und insbesondere welche Temperaturen in den Brennkammern 28 herrschen, entzündet sich das Wasserstoff-Sauerstoff-Gemisch selbst oder es wird mittels der Zündkerzen 31, die von der Steuereinheit 72 aktiviert werden, fremd gezündet. Der infolge der Reaktion des Wasserstoffs mit dem Sauerstoff entstehende und unter Druck stehende Wasserdampf wird auf die Antriebsturbine 36 geleitet, wodurch die Antriebswelle 39 in Drehung versetzt wird. Je nach an der Abtriebseinheit 68 benötigtem Drehmoment wird dieses vom Verteilergetriebe 64 ganz oder teilweise zur Abtriebseinheit 68 und/oder zum Generator 66 geleitet. Der Wasserdampf wird über die Wasserdampfleitung 44 auf die Wasserdampfturbine 46 gegeben, wodurch die Ausgangswelle 48 in Drehung versetzt wird und der Wasserstoffverdichter 50 und der Sauerstoffverdichter 52 angetrieben werden. Dabei kondensiert der Wasserdampf, so dass dieser anschließend als Wasser zurück in den Wassertank 16 geleitet wird, wobei der Wasserdampf das Umwandlungselement 54 durchläuft, welches die im Wasserdampf enthaltene thermische Energie in elektrische Energie umwandelt und dem Speicher 20 zuführt.

Für den Fall, dass nicht genügend Wasserstoff und/oder Sauerstoff vom Elektrolyseur 14 bereitgestellt werden können, kann die Steuereinheit 72 ein Wasserstoffventil 74 und oder ein Sauerstoffventil 76 öffnen, wodurch Wasserstoff vom Wasserstofftank 60 in die Wasserstoffleitung 24 und/oder Sauerstoff vom Sauerstofftank 62 in die Sauerstoffleitung 26 eingeleitet werden können.

Wie erwähnt, sind in den Brennkammern 28 die Temperatursensoren 58 angeordnet, die mit der Steuereinheit 72 verbunden sind. Für den Fall, dass die Temperaturen in den Brennkammern 28 einen kritischen Wert überschreiten, aktiviert die Steuereinheit 72 die Wasserzuführeinheit 56. Infolgedessen wird Wasser in die Brennkammern 28 eingebracht und die Brennkammern 28 gekühlt, wodurch die Temperatur innerhalb der Brennkammern 28 herabgesetzt wird. Der kritische Wert der Temperaturen wird vor allem vom Material der Brennkammern 28 bestimmt. Die Brennkammern 28 können mit nicht dargestellten Beschichtungen versehen werden, welche hochtemperaturbeständig sind, so dass auch sehr hohe Temperaturen zu keinen Beschädigungen der Brennkammern 28 führen.

Die Steuereinheit 72 kann das Verhältnis zwischen Wasserstoff und Sauerstoff in den Brennkammern 28 je nachdem, welches Drehmoment an der Abtriebseinheit 68 benötigt wird, mit einer entsprechenden Ansteuerung des Dosiersystems 34 einstellen. Darüber hinaus kann die Steuereinheit 72 die Zündkerzen 31 ebenfalls abhängig davon aktivieren, welches Drehmoment an der Abtriebseinheit 68 benötigt wird. Folglich lässt sich das Drehmoment an der Abtriebseinheit 68 auch ohne die Verwendung eines Getriebes in bestimmten Grenzen einstellen.

Die Vorrichtung 10 umfasst elektrische Leitungen 78, mit denen elektrische Energie sowie Signale innerhalb der Vorrichtung 10 übertragen werden können. Insbesondere die von der Steuereinheit 72 empfangenen und ausgegebenen Signale können auch drahtlos ausgetauscht werden.

### Bezugszeichenliste

- 10: Vorrichtung
- 12: Fahrzeug
- 14: Elektrolyseur
- 16: Wassertank
- 18: Fördermittel
- 19: Wasserleitung

- 20: Speicher
- 22: Solarzelle
- 24: Wasserstoffleitung
- 26: Sauerstoffleitung
- 28: Brennkammer

- 30: Gehäuse
- 31: Zündkerze
- 32: Einspritzdüse
- 34: Dosiersystem
- 36: Antriebsturbine
- 38: Turbinenschaufel
- 39: Antriebswelle

- 40: Lager
- 42: Kanal
- 44: Wasserdampfleitung
- 46: Wasserdampfturbine
- 48: Ausgangswelle

- 50: Wasserstoffverdichter
- 52: Sauerstoffverdichter
- 54: Umwandlungselement
- 56: Wasserzuführeinheit
- 57: Pumpe
- 58: Temperatursensor
- 59: Ventil

- 60: Wasserstofftank
- 62: Sauerstofftank
- 64: Verteilergetriebe
- 66: Generator
- 68: Abtriebseinheit

- 70: Kupplung
- 72: Steuereinheit
- 74: Wasserstoffventil
- 76: Sauerstoffventil
- 78: elektrische Leitungen

## Patentansprüche

1. Vorrichtung zum Antreiben eines Fahrzeugs (12), Flugzeugs, Schiffs oder dergleichen, umfassend
- einen Elektrolyseur (14) zum Zerlegen von Wasser in Wasserstoff und Sauerstoff unter Verwendung von elektrischer Energie,
- eine Wasserstoffleitung (24), durch welche Wasserstoff vom Elektrolyseur (14) zu einer oder mehreren Brennkammern (28) geführt werden kann,
- eine Sauerstoffleitung (26), durch welche Sauerstoff vom Elektrolyseur (14) zur Brennkammer (28) geführt werden kann, wobei
- in der Brennkammer (28) ein Wasserstoff-Sauerstoff-Gemisch gezündet und Wasserdampf erzeugt werden kann,
- eine mit der Brennkammer (28) zusammenwirkende Antriebsturbine (36) mit einer Antriebswelle (39), welche mit dem Wasserdampf in Drehung versetzbar ist, und
- eine Abtriebseinheit (68) zum Antreiben des Fahrzeugs (12), Flugzeugs, Schiffs oder dergleichen, wobei die Abtriebseinheit (68) mit der Antriebswelle (39) antreibbar ist.

2. Vorrichtung nach Anspruch 1,
**dadurch gekennzeichnet, dass** die Vorrichtung (10) einen Speicher (20) für elektrische Energie aufweist.

3. Vorrichtung nach einem der Ansprüche 1 oder 2,
**dadurch gekennzeichnet, dass** die Vorrichtung eine Anzahl von Solarzellen (22) und/oder eine Anzahl von Generatoren (21) zum Bereitstellen von elektrischer Energie aufweist.

4. Vorrichtung nach einem der vorherigen Ansprüche,
**dadurch gekennzeichnet, dass**
- die Vorrichtung (10) einen Generator (66) zum Bereitstellen von elektrischer Energie und ein Verteilergetriebe (64) aufweist, wobei das Verteilergetriebe (64)
- mit der Antriebswelle (39), dem Generator (66) und der Abtriebseinheit (68) verbunden ist und
- das von der Antriebswelle (39) bereitgestellte Drehmoment wahlweise an den Generator (66) und/oder die Abtriebseinheit (68) verteilt.

5. Vorrichtung nach einem der vorherigen Ansprüche,
**dadurch gekennzeichnet, dass** die Vorrichtung (10)
- einen Wassertank (16) aufweist, in welchem Wasser gespeichert werden kann, wobei
- der Wasserdampf durch eine Wasserdampfleitung (44) von der Antriebsturbine (36) in den Wassertank (16), und
- das Wasser durch eine Wasserleitung (19) zum Elektrolyseur (14) geleitet werden kann.

6. Vorrichtung nach Anspruch 5,
**dadurch gekennzeichnet, dass** die Vorrichtung (10)
- eine in der Wasserdampfleitung (44) angeordnete Wasserdampfturbine (46) mit einer Ausgangswelle (48), welche mit dem Wasserdampf in Drehung versetzbar ist, und
- einen in der Wasserstoffleitung (24) angeordneten Wasserstoffverdichter (50) und/oder einen in der Sauerstoffleitung (26) angeordneten Sauerstoffverdichter (52) umfasst, wobei
- der Wasserstoffverdichter (50) und/oder der Sauerstoffverdichter (52) mittels der Ausgangswelle (48) antreibbar sind.

7. Vorrichtung nach einem der vorherigen Ansprüche,
**dadurch gekennzeichnet, dass** die Vorrichtung
- einen mit der Wasserstoffleitung (24) verbindbaren Wasserstofftank (60) und/oder
- einen mit der Sauerstoffleitung (26) verbindbaren Sauerstofftank (62) umfasst.

8. Vorrichtung nach einem der vorherigen Ansprüche,
**dadurch gekennzeichnet, dass** die Vorrichtung eine in oder an der Brennkammer (28) angeordnete Zündkerze (31) zum Zünden des Wasserstoff-Sauerstoff-Gemischs in der Brennkammer (28) aufweist.

9. Vorrichtung nach einem der vorherigen Ansprüche,
**dadurch gekennzeichnet, dass** die Vorrichtung (10) einen Temperatursensor (58) zum Bestimmen der Temperatur in der Brennkammer (28) aufweist.

10. Vorrichtung nach einem der vorherigen Ansprüche,
**dadurch gekennzeichnet, dass** die Vorrichtung (10) eine Wasserzuführeinheit (56) zum Zuführen von Wasser in die Brennkammer (28) aufweist.

11. Vorrichtung nach einem der vorherigen Ansprüche,
**dadurch gekennzeichnet, dass** die Vorrichtung (10) ein Umwandlungselement (54) zum Umwandeln von Wärme in elektrische Energie umfasst.

12. Verfahren zum Antreiben eines Fahrzeugs (12), Flugzeugs, Schiffs oder dergleichen mit einer Vorrichtung (10) nach einem der vorherigen Ansprüche, umfassend folgende Schritte:
- Zuführen von Wasser und elektrischer Energie zum Elektrolyseur (14),
- Zerlegen des Wassers in Wasserstoff und Sauerstoff mittels des Elektrolyseurs (14),
- Zuführen des Wasserstoffs durch die Wasserstoffleitung (24) und des Sauerstoffs über die Sauerstoffleitung (26) in die Brennkammer (28) derart, dass in der Brennkammer (28) ein zündbares Wasserstoff-Sauerstoff-Gemisch bereitgestellt wird,
- Zünden des Wasserstoff-Sauerstoff-Gemischs in der Brennkammer (28) und Erzeugen von Wasserdampf,
- Leiten des Wasserdampfs auf eine Antriebsturbine (36), die eine Antriebswelle (39) umfasst, welche mit dem Wasserdampf in Drehung versetzt wird, und
- Antreiben des Fahrzeugs (12), Flugzeugs, Schiffs oder dergleichen mittels einer Abtriebseinheit (68), die von der sich drehenden Antriebswelle (39) angetrieben wird.

13. Verfahren nach Anspruch 12, umfassend folgende Schritte:
- Bestimmen der Temperatur in der Brennkammer (28) mittels eines Temperatursensors (58), und
- für den Fall, dass die Temperatur in der Brennkammer (28) einen bestimmten Wert überschreitet, Zuführen von Wasser aus dem Wassertank (16) in die Brennkammer (28) mittels der Wasserzuführeinheit (56), um die Temperatur in der Brennkammer (28) zu senken.

14. Verfahren nach einem der Ansprüche 12 oder 13, umfassend folgende Schritte:
- Steuern oder Regeln der Drehzahl der Antriebswelle (39) mittels der Menge des in die Brennkammer (28) zugeführten Wasserstoffs und der Menge des in die Brennkammer (28) zugeführten Sauerstoffs und/oder mittels der Wahl der Zündzeitpunkte des Wasserstoff-Sauerstoff-Gemischs in der Brennkammer (28).

15. Fahrzeug (12), Flugzeug, Schiff oder dergleichen, welches eine Vorrichtung (10) nach einem der Ansprüche 1 bis 11 aufweist und/oder mit einem Verfahren nach einem der Ansprüche 12 bis 14 antreibbar ist.
